Europäisches Patentamt

(19) European Patent Office

Office européen des brevets

(11) Numéro de publication: **0 283 480**

**B1**

(12) **FASCICULE DE BREVET EUROPEEN**

(45) Date de publication du fascicule du brevet: **02.05.90**

(21) Numéro de dépôt: **87904694.4**

(22) Date de dépôt: **15.07.87**

(86) Numéro de dépôt international:
**PCT/FR87/00280**

(87) Numéro de publication internationale:
**WO 88/00664 28.01.88 Gazette 88/03**

(51) Int. Cl.⁵: **F 16 H 55/38, F 16 H 9/20**

(54) **MECANISME DE TRANSMISSION A RAPPORT VARIABLE DE FACON CONTINUE.**

(30) Priorité: **16.07.86 FR 8610321**

(43) Date de publication de la demande:
**28.09.88 Bulletin 88/39**

(45) Mention de la délivrance du brevet:
**02.05.90 Bulletin 90/18**

(84) Etats contractants désignés:
**BE DE GB IT**

(56) Documents cités:
**FR-A-1 306 716**
**FR-A-2 414 664**
**GB-A-2 093 151**

(73) Titulaire: **Guirriec, Louis**
**15 Rue de la Cote St-Rémy**
**F-95240 Cormeilles en Parisis (FR)**

(72) Inventeur: **Guirriec, Louis**
**15 Rue de la Cote St-Rémy**
**F-95240 Cormeilles en Parisis (FR)**

(74) Mandataire: **Rataboul, Michel Charles**
**CMR INTERNATIONAL 69, rue de Richelieu**
**F-75002 Paris (FR)**

Courier Press, Leamington Spa, England.

EP 0 283 480 B1

## Description

La présente invention concerne un mécanisme de transmission à rapport variable de façon continue. Plus particulièrement, ce mécanisme est du genre de ceux comprenant un arbre menant portant une première poulie avec deux flasques coniques d'écartement variable, un arbre mené portant une seconde poulie avec deux flasques coniques d'écartement variable, des moyens créant des champs magnétiques sensiblement parallèles aux axes de poulies et appliquant ces champs magnetiques par l'intermédiaire de secteurs, bons conducteurs du champ magnétique, placés de part et d'autre de chaque poulie aux flasques des deux poulies dans les régions d'enroulement d'un organe de transmission sans fin, tel que chaîne ou courroie de section trapézoïdale, passant sur les deux poulies en s'enroulant autour de chacune d'elles suivant un rayon variable en fonction de l'écartement des flasques, l'organe de transmission étant réalisé conducteur des champs magnétiques dans le sens transversal, de manière à assurer la fermeture du champ magnétique par la partie de cet organe de transmission enroulée autour de chaque poulie.

Dans les mécanismes de transmission avec poulies à flasques coniques d'écartement variable, constituant des variateurs de vitesse mécaniques, le rapport de rayons d'enroulement de la chaîne ou de la courroie sans fin sur les deux poulies détermine le rapport de transmission, et ce rapport est modifiable, de façon continue, par modification de l'écartement des deux flasques de l'une des poulies, accompagnée d'une modification correspondante, et de sens inverse, de l'écartement des deux flasques de l'autre poulie, selon un principe bien connu.

Les variateurs actuels de ce genre, à courroie ou à chaîne, fonctionnent de façon purement mécanique, et ont leur rendement altéré par l'énergie nécessaire à l'engagement -par coincement- de l'organe de transmission entre les flasques de chaque poulie, et au dégagement de l'organe de transmission dans la zone où il se sépare de chaque poulie. Le rendement est aussi diminué par les frictions et par les glissements éventuels, dans les régions où l'organe de transmission s'enroule sur les poulies. Actuellement, les transmissions à rapports fixes, à chaînes et courroies synchrones, ont un rendement de 96 à 98%. Les variateurs à courroies de section trapézoïdale ont un rendement beaucoup plus faible.

Il a déjà été proposé (voir document GB—A—2 093 151 comme utilisé pour délimiter la revendication de l'invention) d'appliquer aux poulies d'un tel variateur des champs magnétiques de direction transversale, qui se renferment au travers de la chaîne ou courroie, réalisée conductrice des champs magnétiques, de manière à obtenir une immobilisation magnétique de la chaîne ou courroie relativement aux flasques. Dans le cas du document cité, le champ magnétique est engendré par un électro-aimant, et il est appliqué aux deux flasques de la poulie concernée par l'intermédiaire de pièces polaires disposées de part et d'autre de cette poulie.

Un tel circuit magnétique vise à améliorer la liaison entre l'organe de transmission, tel que chaîne ou courroie, et chacune des poulies, pour augmenter le rendement du variateur. Toutefois, la solution connue par le document GB—A—2 093 151 n'est pas satisfaisante car les deux pièces polaires disposées de part et d'autre de la poulie couvrent une étendue invariable de cette poulie, et ne permettent pas d'adapter le champ magnétique à l'arc d'enroulement de la courroie, qui est un arc variable du fait du principe même du variateur.

Dans une situation instantanée où le champ magnétique s'étend au-delà des extrémités de l'arc d'enroulement sur la poulie, il existe un risque de coincement de la chaîne ou courroie, dans les zones d'arrivée de la chaîne ou courroie à la poulie, et de départ de la chaîne ou courroie. Plus particulièrement, dans la zone de départ de la chaîne ou courroie, celle-ci doit être "arrachée" au champ magnétique, ce qui demande un effort supplémentaire réduisant le rendement global de la transmission.

Dans une situation instantanée où, au contraire, le champ magnétique s'étend seulement sur un secteur de la poulie beaucoup plus petit que l'arc d'enroulement de la chaîne ou courroie, ce champ magnétique est mal exploité, et le rendement global en souffre également.

Par ailleurs, dans le document GB—A—2 093 151, les deux pièces polaires disposées de part et d'autre de la poulie "suivent" les variations d'écartement des deux flasques et cette poulie. Ainsi, les pièces polaires doivent être déplaçables transversalement, ce qui exige des moyens de guidage appropriés. Ceci a aussi pour conséquence une réalisation du noyau de l'électro-aimant en deux parties, solidaires respectivement des deux pièces polaires; des forces magnétiques doivent ainsi être vaincues lorsque l'on écarte les deux flasques pour faire varier le rapport de transmission.

Compte tenu de tout ce qui précède, l'amélioration de rendement obtenue avec la seule solution électro-magnétique connue reste illusoire.

Le document GB—A—2 093 151 décrit encore une variante dans laquelle des aimants permanents soit disposés directement sur les deux flasques de la poulie. Une disposition similaire, comportant des aimants permanents tournant avec les poulies, est révélée aussi par le document FR—A—1 306 716. Il est évident que cette solution conduit à une répartition annulaire du champ magnétique, sur le tour complet de la poulie (soit 360°), et non pas sur le seul arc d'enroulement de la chaîne ou courroie, laquelle doit par conséquent être en permanence "décoincée" à son départ de la poulie.

La présente invention vise à obtenir une augmentation effective du rendement des variateurs du genre considéré, par amélioration du procédé d'application de champs magnétiques, aussi bien avec des électro-aimants qu'avec des aimants permanents.

A cet effet, il est prévu selon l'invention que les secteur sont montés pivotants autour des axes des poulies en étant déplaçables angulairement en fonction du rapport de transmission, de manière à rester en correspondance exacte avec les régions d'enroulement de l'organe de transmission.

Ainsi, le champ magnétique appliqué à chaque poulie est adapté en permanence à l'arc d'enroulement de l'organe de transmission sans fin tel que chaîne ou courroie, l'étendue du champ magnétique étant modifiée en fonction du rapport de transmission pour maintenir une correspondance très exacte avec régions d'enroulement de l'organe de transmission. On évite ainsi tous coincements nocifs au fonctionnement, et le rendement s'en trouve augmenté de façon sensible, sa valeur pouvant se rapprocher de 100%.

Les champs magnétiques, appliqués aux flasques des deux poulies par l'intermédiaire des secteurs pivotants, peuvent être créés par des électro-aimants, ou par les aimants permanents disposés en position fixe à l'extérieur des poulies (et non pas sur ces poulies comme dans les solutions proposées antérieurement).

De préférence, le champ magnétique est appliqué à chaque poulie, par l'intermédiaire des secteurs pivotants précités, sur un angle au moins légèrement inférieur au secteur d'enroulement de l'organe de transmission autour de cette poulie, ce qui donne la certitude de ne pas soumettre la chaîne ou courroie à un champ magnétique dans ses zones d'arrivée et de départ.

La correction de position angulaire des secteurs, adaptant le champ magnétique à l'arc d'enroulement de l'organe de transmission, est réalisable de façon simple par une commande mécanique, à partir d'un dispositif tendeur, notamment dans le cas où l'organe de transmission est une courroie.

Toujours pour avoir des champs magnétiques bien localisés, et orientés parallèlement aux axes des poulies, les flasques coniques des deux poulies présentent avantageusement des entailles radiales, qui les divisent en de nombreux petits secteurs séparés les uns des autres par des parties de faible section, suffisantes pour assurer la résistance mécanique; ces parties peuvent être réalisées par une matière non magnétique, pour assurer une séparation totale des secteurs, du point de vue magnétique.

Il convient aussi d'assurer la continuité des circuits magnétiques, bien que les flasques coniques soient mobiles axialement en raison du principe même du variateur. A cet effet, chaque flasque comporte avantageusement, sur sa face extérieure, un collecteur annulaire introduit à une profondeur variable dans des rainures complémentaires en arc de cercle creusées dans les secteurs pivotants qui sont placés de part et d'autre de chaque poulie. Il devient ainsi inutile de prévoir des secteurs déplaçables transversalement pour "suivre" les flasques.

Dans certains variateurs connus, il est prévu sur les arbres menant et mené, entre les deux flasques de chaque poulie, des éléments radiaux additionnels, tels que disques, calés sur ces arbres et prévus pour s'engager dans des rainures longitudinales correspondantes ménagées sur la face interne de l'organe de transmission sans fin (voir document FR—A—2 414 664 ou EP—A—0003198). Le principe de l'invention est applicable, de façon très avantageuse, à ce type particulier de variateur, en prévoyant que lesdits éléments radiaux, tels que disques, sont réalisés au moins partiellement en matériau bon conducteur des champs magnétiques, de préférence avec des divisions dans le sens radial, afin de réduire la diffusion du champ magnétique. Ainsi, la liaison entre l'organe de transmission et ces disques, dans les parties enroulées, est également renforcée par immobilisation magnétique, ce qui contribue à l'augmentation du rendement.

Dans le cas d'un variateur à chaîne sans fin, les maillons de la chaîne comprennent, selon un mode de réalisation particulier, des lamelles latérales bonnes conductrices des champs magnétiques, avec des faces inclinées prévues pour s'appliquer contre les flasques coniques des poulies, et des lamelles intermédiaires également bonnes conductrices des champs magnétiques et prévues pour s'intercaler entre les éléments radiaux additionnels, tels que disques, calés sur les arbres des poulies, toutes ces lamelles étant maintenues par au moins un élément de liaison transversal non conducteur des champs magnétiques.

Sur ce principe, peuvent être réalisées des chaînes assurant la transmission de puissance mécanique, d'une poulie à l'autre, soit par traction, soit par poussée.

La même conception de l'organe de transmission est également applicable à un variateur à courroie, en prévoyant que la courroie comporte des parties latérales et des parties intermédiaires, séparées par des intervalles et très perméables aux flux magnétiques, qui sont réunies par des éléments de liaison transversaux non conducteurs des champs magnétiques; cette courroie peut être du type "synchrone", avec une face crantée.

De toute façon, l'invention sera mieux comprise, et d'autres caractéristiques seront mises en évidence, à l'aide de la description qui suit, en référence au dessin schématique annexé représentant, à titre d'exemples non limitatifs, quelques formes de réalisation de ce mécanisme de transmission à rapport variable de façon continue:

Figure 1 est une vue très schématique, en coupe longitudinale, d'un variateur de vitesse conforme à l'invention;

Figure 2 est une vue de côté partielle du variateur de figure 1, montrant notamment les flasques des poulies par leur côté extérieur;

Figure 3 et une vue partielle correspondant à la partie inférieure de la figure 1, et indiquant un électro-aimant particulier utilisable dans la réalisation de ce variateur;

Figure 4 est une autre vue de côté partielle du variateur de figure 1, montrant les secteurs qui dirigent les champs magnétiques sur les flasques des poulies;

Figure 5 est une vue de détail, en coupe transversale, d'une chaîne destinée à un variateur de vitesse selon l'invention;

Figure 6 représente, en vue de côté, une configuration de chaîne applicable au variateur de vitesse objet de l'invention;

Figure 7 représente, en vue de côté, une autre configuration de chaîne, ainsi qu'une variante de celle-ci, également applicables au variateur de vitesse objet de l'invention;

Figure 8 est une vue similaire aux précédentes, illustrant l'application de l'invention à un variateur de vitesse à courroie;

Figure 9 est une vue de détail, en coupe transversale suivant IX—IX de figure 10, d'une courroie destinée à un variateur de vitesse conforme à l'invention;

Figure 10 est une vue partielle de cette courroie, en coupe longitudinale suivant X—X de figure 9;

Figure 11 est une vue de face partielle d'un disque intermédiaire appartenant à l'une ou l'autre des poulies du variateur;

Figure 12 est une vue en coupe passant par l'axe du disque, suivant XII—XII de figure 11;

Figure 13 montre, à plus grande échelle, un détail de ce disque, en coupe suivant XIII—XIII de figure 12;

Figure 14 est une vue en coupe similaire à figure 12, mais relative à une autre réalisation de disque;

Figure 15 montre, à plus grande échelle, un détail de ce dernier disque, en coupe suivant XV—XV de figure 14.

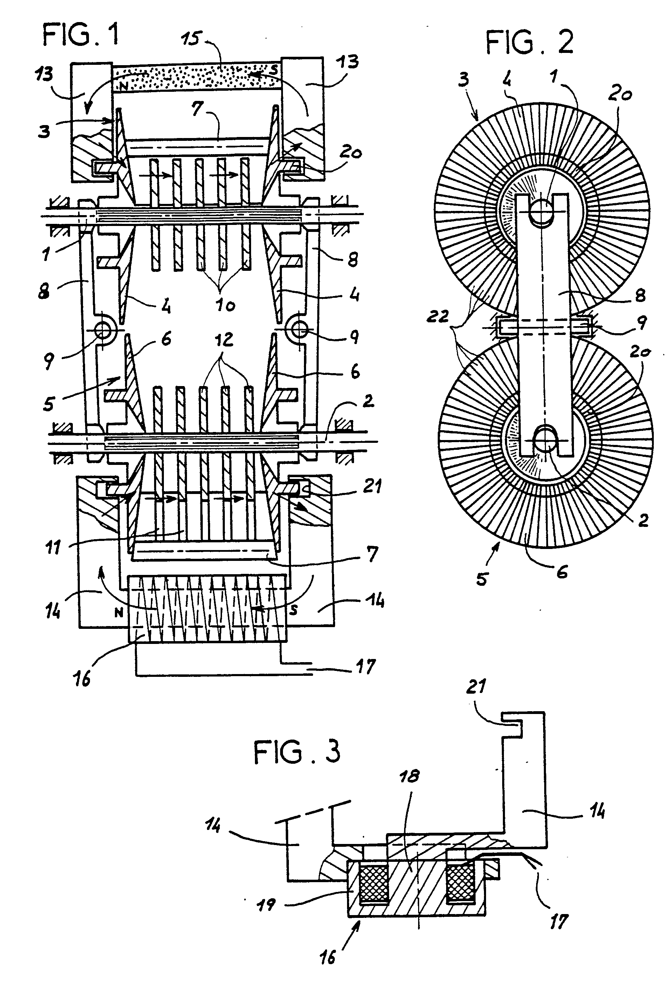

Les figures 1 et 2 montrent un variateur de vitesse, comprenant un arbre menant 1 et un arbre mené 2, d'axes parallèles. L'arbre menant 1 porte une première poulie 3, avec deux flasques coniques 4 d'écartement variable. L'arbre mené 2 porte une seconde poulie 5, avec deux flasques coniques 6 d'écartement variable. Un organe de transmission sans fin 7, tel que chaîne ou courroie, passe sur les deux poulies 3 et 5. L'organe de transmission 7 s'enroule autour de la première poulie 3 suivant un rayon variable déterminé par l'écartement des deux flasques 4, et autour de la seconde poulie 5 suivant un rayon variable déterminé par l'écartement des deux flasques 6. Le rapport des rayons d'enroulement de l'organe de transmission 7 détermine le rapport de transmission. Ce rapport est modifiable, de façon continue, par modification de l'écartement des flasques 4 de la poulie 3, s'accompagnant d'une modification en sens inverse de l'écartement des flasques 6 de la poulie 5, grâce à des leviers 8 qui pivotent autour de points 9 situés entre les deux poulies 3 et 5.

Dans l'exemple représenté, l'arbre menant 1 porte, entre les deux flasques 4, des disques 10 calés sur cet arbre 1 et s'engageant dans des rainures longitudinales correspondantes 11, ménagées sur la face interne de l'organe de transmission 7. De même, l'arbre mené 2 porte, entre les deux flasques 6, des disques 12 calés sur cet arbre 2 et s'engageant dans les rainures 11.

Selon l'invention, les flasques 4 et 6 des deux poulies 3 et 5, ainsi que les disques 10 et 12, sont réalisés dans des matériaux bons conducteurs des champs magnétiques. Des champs magnétiques parallèles aux axes des poulies sont appliqués aux flasques 4 et 6, par l'intermédiaire de secteurs 13 à 14, bons conducteurs du flux magnétique, placés de part et d'autre de la poulie 3 et de la poulie 5, respectivement.

Comme montré à la partie supérieure de la figure 1, les champs magnétiques peuvent être créés par des aimants permanents 15, disposés de telle manière que les flasques 13 constituent des pièces polaires, respectivement "Nord" et "Sud". Les champs magnétiques peuvent aussi être créés par des électro-aimants 16, alimentés par un circuit électrique 17, comme indiqué à la partie inférieure de la figure 1. Plus particulièrement, comme le montre la figure 3, on peut utiliser des électro-aimants 16 du type "en cloche", avec des pertes magnétiques très faibles, qui comprennent un noyau central 18 relié magnétiquement aux secteurs 14 situés d'un côté, et une armature extérieure 19 reliée magnétiquement aux secteurs 14 situés du côté opposé.

Les champs magnétiques ainsi créés sont amenés aux flasques 4 et 6, qui comportent chacun à cet effet, sur leurs faces extérieures, un collecteur annulaire 20 introduit dans des rainures complémentaires 21, creusées dans les secteurs adjacents 13 et 14. Comme le montre la figure 2, chaque flasque 4 ou 6 présente encore un grand nombre d'entailles radiales 22, qui le divisent en de nombreux petits secteurs, séparés les uns des autres par des parties de section faible créant un isolement magnétique entre ces petits secteurs.

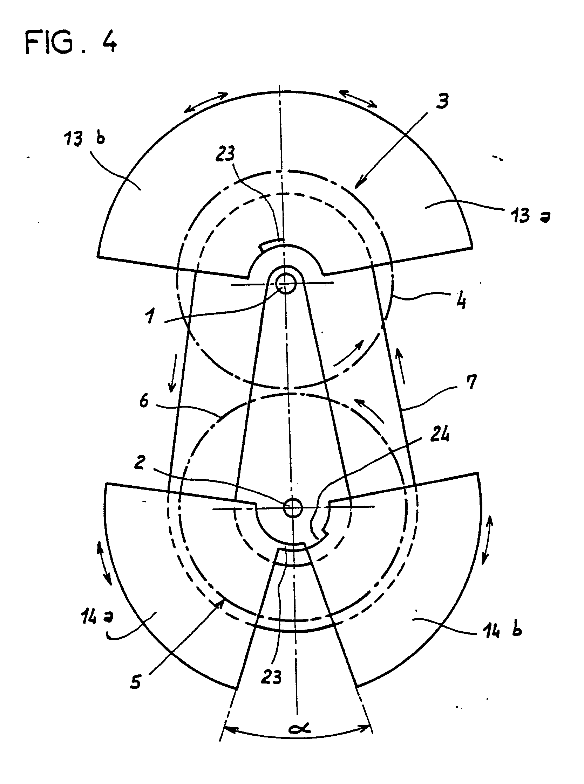

En se référant aussi à la figure 4, les secteurs 13 et 14 sont disposés de manière à répartir les champs magnétiques seulement dans les régions d'enroulement de l'organe de transmission 7 autour de chaque poulie 3 ou 5. De préférence, le secteur de chaque poulie 3 ou 5, auquel est appliqué le champ magnétique, est d'un angle au moins légèrement inférieur au secteur d'enroulement de l'organe de transmission 7 sur la poulie considérée.

Cet organe de transmission 7 est réalisé conducteur des champs magnétiques, dans le sens transversal. Lorsqu'une portion de l'organe de transmission 7, telle qu'un maillon de chaîne, se présente au point de tangence avec l'une des poulies 3 ou 5, donc parvient au contact des flasques 4 ou 6, le maillon pénètre aussi dans le champ magnétique, et à ce moment il y a fermeture du circuit magnétique à travers les secteurs 13 ou 14, les flasques 4 ou 6 et le maillon, comme indiqué par les flèches de la figure.

Le circuit magnétique, passant par un maillon déterminé, reste fermé jusqu'au moment où le maillon quitte la poulie 3 ou 5, en se séparant des flasques 4 ou 6.

On obtient ainsi une immobilisation magnétique des parties de l'organe de transmission 7 enroulées sur les poulies 3 et 5, avec amélioration non seulement de la liaison entre l'organe 7 et les faces coniques des flasques 4 et 6, mais aussi de la liaison de l'organe 7 avec les disques 10 et 12. Le rendement de la transmission s'en trouve amélioré, en conséquence. De plus, le rendement de la transmission est optimisé en faisant correspondre à tout moment les champs magnétiques, appliqués aux poulies 3 et 5, avec les régions d'enroulement de l'organe de transmission 7, de telle sorte que les maillons sont libres aux points de tangence.

La figure 4 montre comment les champs magnétiques peuvent être maintenus exactement dans les régions d'enroulement de l'organe de transmission 7 autour des poulies 3 et 5, en tenant compte de la variation des rayons d'enroulement qui modifie l'étendue angulaire de ces régions d'enroulement. Chaque secteur 13 ou 14 est monté pivotant, autour de l'axe de la poulie correspondante 3 ou 5. Pour un rayon d'enroulement faible, comme indiqué à la partie supérieure de la figure 4, les secteurs 13a et 13b sont resserrés. Au contraire, pour un rayon d'enroulement important, comme indiqué à la partie inférieure de la figure 4, les secteurs 14a et 14b sont écartés l'un de l'autre, par un déplacement relatif selon un certain angle α. Pour assurer la continuité du champ magnétique d'un secteur 13a ou 14a à l'autre secteur 13b et 14b, dans l'intervalle correspondant à l'angle α, l'un des secteurs 13a ou 14a est pourvu d'un becquet 23 qui s'emboîte dans un évidement complémentaire 24 de l'autre secteur 13b ou 14b.

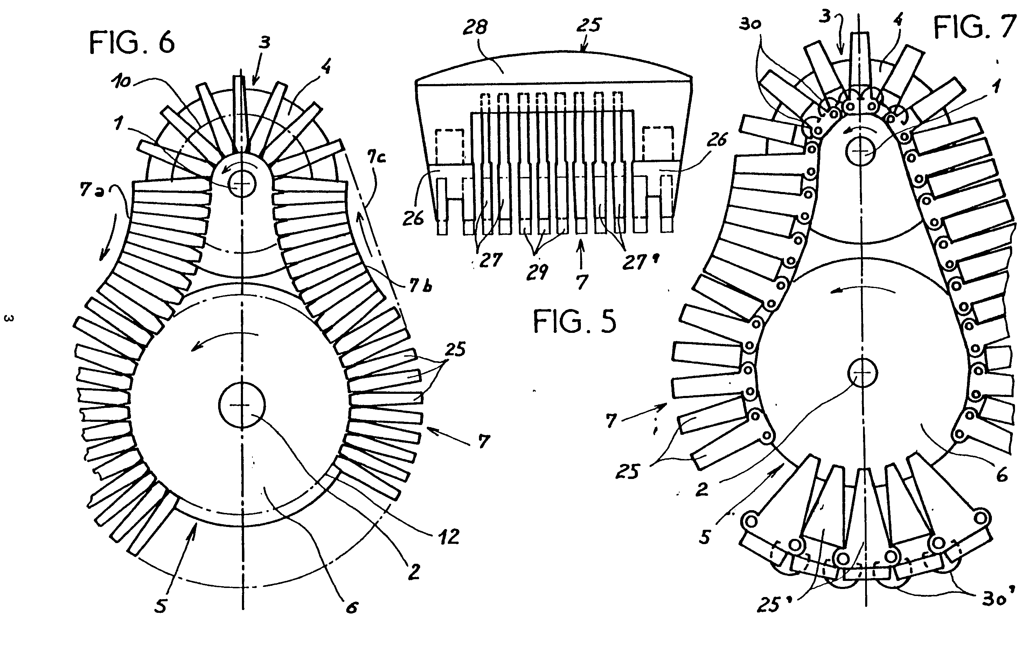

On décrira maintenant plus particulièrement, en référence aux figures 5 à 7, un variateur de vitesse dans lequel l'organe de transmission sans fin 7 est une chaîne, formée de maillons 25 liés les uns aux autres par des articulations.

La figure 5 est une vue en coupe transversale, montrant la section d'un maillon 25 de la chaîne sans fin 7. Le maillon 25 comprend des éléments extrêmes 26, en forme de lamelles ou de plaquettes, avec des faces extérieures inclinées prévues pour s'appliquer contre les flasques coniques respectifs 4 et 6 des poulies 3 et 5. Entres les éléments extrêmes 26 est disposée une série de lamelles intermédiaires 27, séparées par des intervalles et prévues pour s'intercaler entre les disques 10 et 12 des poulies 3 et 5; les lamelles 27 peuvent être à faces parallèles, ou avec une légère dépouille comme indiqué en 27', en fonction du type des disques 10 et 12 (à faces parallèles ou biconiques convexes — voir la description détaillée donnée plus bas). Les éléments extrêmes 26, de même que les lamelles intermédiaires 27, sont réalisés en matériau bon conducteur des champs magnétiques. Tous ces éléments 26 et 27 sont réunis par un élément transversal de maintien 28, réalisé au contraire en un matériau non conducteur des champs magnétiques. La liaison articulée entre deux maillons 25 consécutifs est réalisable au moyen de lamelles de liaison 29. D'autres moyens de liaison, tels que clips, ressorts, fils, etc... sont aussi utilisables pour réunir les maillons entre eux et former une chaîne 7 complète, refermée sur elle-même.

D'une façon générale, pendant que s'effectue une variation du rapport de transmission, il se produit une variation du rayon d'enroulement de la chaîne 7, qui nécessite une compensation de longueur, ou un glissement. Cette dernière solution étant à éviter, une solution avantageuse de compensation, applicable à une chaîne 7 travaillant en poussé, est illustrée par la figure 6:

Entre les deux poulies 3 et 5, l'empilage des maillons 25 de la chaîne 7 forme ici deux brins normalement concaves, à savoir un brin "poussant" 7a transmettant la puissance mécanique et un brin "mou" 7b. Ainsi, en cas de variation rapide du rapport de transmission, le brin "mou" 7b peut venir en position 7c, suivant un trajet plus rectiligne, et de cette façon compenser la différence des rayons pendant la variation. Par ailleurs, la configuration normalement concave des deux brins 7a et 7b permet d'avoir un angle d'enroulement plus important de la chaîne 7 autour de chacune des poulies 3 et 5.

La figure 7 représente une autre chaîne sans fin 7, qui travaille au contraire en traction, la puissance mécanique étant transmise par le brin tendu. L'autre brin de la chaîne 7, qui reste "mou", prend une configuration concave, des ressorts 30 montés entre les maillons 25 assurant cette disposition. Ici également, la compensation de longueur est permise par le brin mou concave de la chaîne 7.

La figure 7 montre principalement une chaîne 7 dont les maillons 25 sont liés entre eux par leurs parties intérieures, déterminant le diamètre primitif d'enroulement. Toutefois, au bas de la figure 7, est indiquée une variante de chaîne où le diamètre primitif est extérieur et supérieur au diamètre des disques 4 et 6, les maillons 25' etant ici articulés entre eux par leurs parties extérieures, toujours avec adjonction de ressorts 30' qui maintiennent normalement le brin mou dans une configuration concave, tout en permettant la compensation.

Les figures suivantes 8 à 10 sont relatives à un variateur de vitesse dans lequel l'organe de transmission sans fin 7 est une courroie. Le variateur comprend encore, dans ce cas, un dispositif tendeur "flottant" 31 avec deux galets 32 et 33, appliqués respectivement sous les deux brins de la courroie 7 au moyen d'un ressort 34, enroulé autour de l'arbre mené 2, qui tend à écarter les galets 32 et 33 l'un de l'autre, dans les limites permises par une butée 35. Le premier galet 32 est appliqué sous le brin tendu de la courroie 7, tandis que le second galet 33 est appliqué sous le brin mou. Ces galets 32 et 33 sont lisses, ou à denture dans le cas d'une courroie 7 du type "synchrone".

Le dispositif tendeur 31 assure la compensation de longueur, pendant la variation du rapport de transmission. En cas d'inversion de couple, ce dispositif tendeur 31 pivote autour de l'arbre

mené 2, le brin tendu de la courroie 7 devenant le brin mou. De plus, ce dispositif tendeur sert à commander une correction de l'étendue angulaire des champs magnétiques, en fonction du rapport de transmission, ce qui est réalisable d'une manière simple par une liaison mécanique reliant un élément du tendeur aux secteurs placés de part et d'autre des poulies 3 et 5.

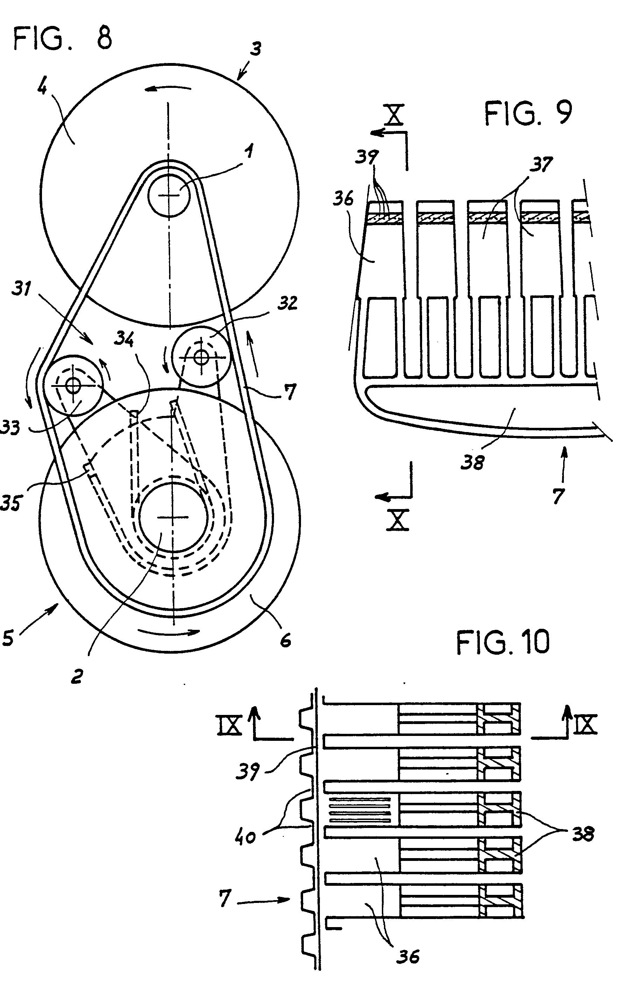

Les figures 9 et 10 montrent le détail d'une courroie 7 du type "synchrone". La courroie 7 comprend des parties latérales 36 et des parties intermédiaires 37, en protubérance sur sa face interne, qui sont très perméables aux flux magnétiques. Les parties latérales 36 présentent des faces extérieures inclinées, prévues pour s'appliquer contre les flasques coniques respectifs 4 et 6 des poulies 3 et 5. Les parties intermédiaires 37, séparées par des intervalles, sont prévues pour s'intercaler entre les disques 10 et 12 des poulies 3 et 5. Toutes ces parties 36 et 37 sont réunies par des éléments de liaison transversaux 38 non conducteurs des champs magnétiques. La résistance longitudinale de la courroie 7 est assurée par des fils noyés 39. Enfin, cette courroie 7 présente des crans 40 sur sa face intérieure.

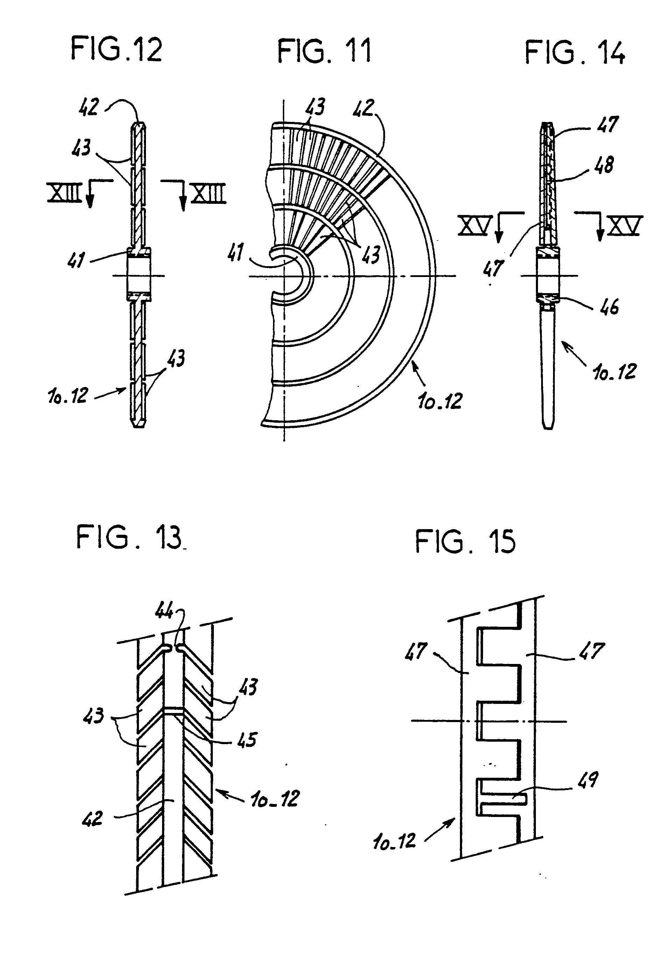

Les figures 11 et suivantes montrent, enfin, le détail d'un disque intermédiaire 10 ou 12 appartenant à la poulie 3 ou 5, dans divers modes de réalisation:

Les figures 11 et 12 représentent un disque 10 ou 12 à faces parallèles. Celui-ci comprend un moyeu 41 imperméable au champ magnétique, rendu solidaire par exemple par bombardement électronique d'une âme rigide 42 en acier. Sur les deux faces de l'âme rigide 42 sont rapportés des éléments élastiques 42, saturés de manière magnétique, tels que des éléments en caoutchouc ou en matière plastique saturé de poudre de fer, fixés par surmoulage.

Comme le montre la figure 13, l'âme rigide 42 du disque peut comporter des amincissements radiaux 44, ou des lumières radiales 45, éventuellement multiples sur un même rayon, afin de réduire la diffusion du champ magnétique, et de limiter ainsi les pertes magnétiques. Ces "barrières" au champ magnétique doivent correspondre sensiblement au pas des maillons 25 de la chaîne 7 (dans le cas d'un variateur à chaîne, selon les figures 5 à 7).

La figure 14 représente un disque 10 ou 12 biconique convexe. Celui-ci est constitué d'un moyeu 46, de deux rondelles de tôle 47 légèrement coniques, et d'une matière intermédiaire élastique 48, saturée d'éléments perméables au champ magnétique, qui est disposée entre les deux rondelles 47. Comme le montre la figure 15, ces deux rondelles 47 peuvent comporter des dentures qui s'imbriquent l'une dans l'autre, afin d'assurer le passage du champ magnétique, des amincissements 49 prévus sur les rondelles 47 évitant la dispersion du champ magnétique. Les rondelles 47 peuvent être liées en rotation au moyeu 46 par l'intermédiaire d'anneaux élastiques.

Dans tous les cas, lorsqu'un maillon de chaîne ou une portion de courroie se présente au point de tangence sur une poulie, les disques 10 ou 12, pourvus de parties élastiques comme décrit cidessus, sont mis en légère pression de sorte qu'il n'y a pas de temps de réponse par inertie mécanique; compte tenu des matériaux utilisés, on obtient la fermeture du champ magnétique à travers tous les disques 10 ou 12.

Le variateur de vitesse objet de l'invention peut, selon les cas, fonctionner à sec ou lubrifié.

Comme il va de soi, l'invention ne se limite pas aux seules formes de réalisation de ce mécanisme de transmission à rapport variable de façon continue qui ont été décrites ci-dessus, à titre d'exemples; elle en embrasse, au contraire, toutes les variantes respectant le même principe, quels qu'en soient les détails constructifs. C'est ainsi, notamment, que l'on ne s'éloignerait pas du cadre de l'invention en modifiant la disposition (périphérique ou latérale) ou le nombre ou la forme des aimants permanents, ou des électroaimants, qui engendrent les champs magnétiques, l'essentiel étant que des circuits magnétiques soient établis.

## Revendications

1. Mécanisme de transmission à rapport variable de façon continue, du genre de ceux comprenant un arbre menant (1) portant une première poulie (3) avec deux flasques coniques (4) d'écartement variable, un arbre mené (2) portant une seconde poulie (5) avec deux flasques coniques (6) d'écartement variable, des moyens (13 à 24) créant des champs magnétiques sensiblement parallèles aux axes des poulies (3, 5) et appliquant ces champs magnétiques par l'intermédiaire de secteurs (13, 14), bons conducteurs du champ magnétique, placés de part et d'autre de chaque poulie (3, 5) aux flasques (4, 6) des deux poulies (3, 5) dans les régions d'enroulement d'un organe de transmission sans fin (7), tel qu'en chaîne ou courroie de section trapézoïdale, passant sur les deux poulies (3, 5) en s'enroulant autour de chacune d'elles suivant un rayon variable en fonction de l'écartement des flasques (4, 6), l'organe de transmission (7) étant réalisé conducteur des champs magnétiques dans le sens transversal, de manière à assurer la fermeture du champ magnétique par la partie de cet organe de transmission (7) enroulée autour de chaque poulie (3, 5), caractérisé en ce que les secteurs (13, 14) sont montés pivotants autour des axes des poulies (3, 5) en étant déplaçables angulairement en fonction du rapport de transmission, de manière à rester en correspondance exacte avec les régions d'enroulement de l'organe de transmission (7).

2. Mécanisme de transmission selon la revendication 1, caractérisé en ce que les champs magnétiques, appliqués aux flasques (4, 6) des deux poulies (3, 5), par l'intermédiaire des secteurs pivotants (13, 14), sont créés par des aimants permanents (15) intercalés dans des circuits magnétiques comprenant ces secteurs (13, 14).

3. Mécanisme de transmission selon la revendication 1, caractérisé en ce que les champs magnétiques, appliqués aux flasques (4, 6) des deux poulies (3, 5), par l'intermédiaire des secteurs pivotants (13, 14), sont créés par des électro-aimants (16) intercalés dans des circuits magnétiques comprenant ces secteurs (13, 14).

4. Mécanisme de transmission selon l'une quelconque des revendications 1 à 3, caractérisé en ce que le champ magnétique est appliqué à chaque poulie (3, 5), par l'intermédiaire des secteurs pivotants (13, 14) précités, sur un angle au moins légèrement inférieur au secteur d'enroulement de l'organe de transmission (7) autour de cette poulie (3, 5).

5. Mécanisme de transmission selon l'une quelconque des revendications 1 à 4, caractérisé en ce que les secteurs précités (13, 14) comprennent, sur chaque côté d'une poulie (3, 5), au moins un secteur (13a, 14a) pourvu d'un becquet (23) s'emboîtant dans un évidement complémentaire (24) d'un autre secteur (13b, 14b) pour assurer la continuité du champ magnétique d'un secteur à l'autre.

6. Mécanisme de transmission selon l'une quelconque des revendications 1 à 5, caractérisé en ce que les flasques coniques (4, 6) des deux poulies (3, 5) présentent des entailles radiales (22), qui les divisent en de nombreux petits secteurs séparés les uns des autres par des parties de faible section et/ou en matière non magnétique.

7. Mécanisme de transmission selon l'une quelconque des revendications 1 à 6, caractérisé en ce que chaque flasque conique (4, 6) comporte, sur sa face extérieure, un collecteur annulaire (20) introduit à profondeur variable dans des rainures complémentaires en arc de cercle (21), creusées dans les secteurs (13, 14) qui sont placés de part et d'autre de chaque poulie (3, 5).

8. Mécanisme de transmission selon l'une quelconque des revendications 1 à 7, comprenant sur les arbres menant (1) et mené (2), entre les deux flasques (4, 6) de chaque poulie (3, 5), des éléments radiaux additionnels, tels que disques (10, 12), calés sur ces arbres (1, 2) et prévus pour s'engager dans des rainures longitudinales correspondantes (11) ménagées dans l'organe de transmission sans fin (7), caractérisé en ce que lesdits éléments radiaux, tels que disques (10, 12) sont réalisés au moins partiellement en matériau bon conducteur des champs magnétiques, de préférence avec des divisions (44, 45, 49) dans le sens radial, de manière à contribuer à l'immobilisation magnétique des parties enroulées de l'élément de transmission sans fin (7).

9. Mécanisme de transmission selon la revendication 8, caractérisé en ce que les disques (10, 12) comprennent des éléments élastiques (43, 48) saturés de matière magnétique.

10. Mécanisme de transmission selon la revendication 8 ou 9, dans lequel l'organe de transmission est une chaîne sans fin, caractérisé en ce que les maillons (25) de la chaîne (7) comprennent des lamelles latérales (26) bonnes conductrices des champs magnétiques, avec des faces inclinées prévues pour s'appliquer contre les flasques coniques (4, 6) des poulies (3, 5), et des lamelles intermédiaires (27) également bonnes conductrices des champs magnétiques et prévues pour s'intercaler entre les éléments radiaux additionnels, tels que disques (10, 12), calés sur les arbres (1, 2) des poulies (3, 5), toutes ces lamelles (26, 27) étant maintenues par au moins un élément de liaison transversal (28) non conducteur des champs magnétiques.

11. Mécanisme de transmission selon la revendication 10, caractérisé en ce que la chaîne sans fin (7), travaillant en traction (Figure 7) ou en poussée (Figure 6), est constituée de maillons (25) qui forment au moins un brin concave entre les deux poulies (3, 5), et permettent une compensation de longueur pendant la variation du rapport de transmission.

12. Mécanisme de transmission selon la revendication 8 ou 9, dans lequel l'organe de transmission est une courroie, caractérisé en ce que la courroie (7) comporte des parties latérales (36) et des parties intermédiaires (37) séparées par des intervalles et très perméables aux flux magnétiques, qui sont réunies par des éléments de liaison transversaux (38) non conducteurs des champs magnétiques.

13. Mécanisme de transmission selon la revendication 12, caractérisé en ce qu'il comprend un dispositif tendeur "flottant" (31), avec deux galets (32, 33) appliqués respectivement sous les deux brins de la courroie (37) au moyen d'un ressort (34) tendant à écarter les galets (32, 33) l'un de l'autre.

14. Mécanisme de transmission selon la revendication 13, caractérisé en ce que le déplacement angulaire des secteurs (13, 14), placés de part et d'autre des poulies (3, 5), est réalisé à partir du dispositif tendeur (31), notamment par une liaison mécanique.

**Patentansprüche**

1. Stufenloses Getriebe von der Art mit einer angetriebenen Welle (1), die eine erste Rolle oder Scheibe (3) mit zwei konischen Flanschen (4) von veränderlichem Abstand trägt, einer angetriebenen Welle (2), die eine zweite Rolle oder Scheibe (5) mit zwei konischen Flanschen (6) von veränderlichem Abstand trägt, Einrichtungen (13 bis 24), die magnetische Felder, die im wesentlichen parallel zu den Achsen der Scheiben (3, 5) verlaufen und diese magnetischen Felder mittels Abschnitten (13, 14), welche gute Leiter der magnetischen Felder sind, die beiderseits einer jeden Scheibe (3, 5) angeordnet sind, auf die Flansche (4, 6) der beiden Scheiben (3, 5) in dem Umschlingungsbereichen eines endlosen Getriebeorgans (7), wie einer Kette oder eines im Querschnitt trapezförmigen Riemens aufbringen, der über die beiden Scheiben (3, 5) unter Umschlingen einer jeden von ihnen gemäß einem veränderlichen Radius in Abhängigkeit des Abstandes der Flansche (4, 6) hinwegläuft, wobei das Getriebeorgan (7) als Leiter der magnetischen Felder in Querrichtung derart ausgebildet ist, daß es das Schließen des magnetischen Felds durch den Abschnitt dieses Getriebeorgans (7), das jede Scheibe (3, 5) umschlingt, sicherzustellen, dadurch gekennzeichnet, daß die Abschnitte (13, 14) schwenkbar um die Achsen der Scheiben (3, 5) angeordnet sind, wobei sie winkelmäßig in Abhängigkeit des Getriebeverhältnisses bewegbar sind, derart, daß sie in exakter Verbindung mit den Umschlingungsbereichen des Getriebeorgans (7) verbleiben.

2. Getriebe nach Anspruch 1, dadurch gekennzeichnet, daß die magnetischen Felder, die auf die Flansche (4, 6) der beiden Scheiben (3, 5) über die schwenkbaren Abschnitte (13, 14) aufgebracht werden, durch Dauermagneten (15) erzeugt werden, die zwischen diese Abschnitte (13, 14) aufweisenden magnetischen Kreisen angeordnet sind.

3. Getriebe nach Anspruch 1, dadurch gekennzeichnet, daß die magnetischen Felder, die auf die Flansche (4, 6) der Scheiben (3, 5) mittels der schwenkbaren Abschnitte (13, 14) aufgebracht werden, durch Elektromagneten (16) erzeugt werden, die zwischen den magnetischen Kreisen angeordnet sind, die diese Abschnitte (13, 14) aufweisen.

4. Getriebe nach einem der Ansprüche 1 bis 3, dadurch gekennzeichnet, daß das magnetische Feld auf einem Winkel auf jede Scheibe (3, 5) mittels der vorgenannten schwenkbaren Abschnitte (13, 14) aufgebracht wird, der wenigstens leicht geringer ist als der Umschlingungsabschnitt des Getriebeorgans (7) um jede Scheibe (3, 5).

5. Getriebe nach einem der Ansprüche 1 bis 4, dadurch gekennzeichnet, daß die vorgenannten Abschnitte (13, 14) auf jeder Seite einer Scheibe (3, 5) wenigstens einen Abschnitt (13a, 14a) mit einer Nase (23) aufweisen, die sich in eine komplementäre Ausnehmung (24) eines anderen Abschnitts (13b, 14b) einfügt, um den Fortlauf des magnetischen Feldes von einem Abschnitt zum anderen sicherzustellen.

6. Getriebe nach einem der Ansprüche 1 bis 5, dadurch gekennzeichnet, daß die konischen Flansche (4, 6) der beiden Scheiben (3, 5) radiale Einschnitte (22) aufweisen, die sie in eine Vielzahl von kleinen voneinander getrennten Abschnitten aufteilen, durch Bereiche von geringem Querschnitt und/oder aus nichtmagnetischem Material.

7. Getriebe nach einem der Ansprüche 1 bis 6, dadurch gekennzeichnet, daß jeder konische Flansch (4, 6) auf seiner Außenseite einen ringförmigen Kollektor (20) aufweist, der mit unterschiedlicher Tiefe in komplementäre Kerben in Kreisbogenform (21) eingeführt ist, die in den Abschnitten (13, 14) eingebracht sind, die beiderseits einer jeden Scheibe (3, 5) angeordnet sind.

8. Getriebe nach einem der Ansprüche 1 bis 7, welches auf der Antriebswelle (1) und angetriebenen Welle (2) zwischen den beiden Flanschen (4, 6) einer jeden Scheibe (3, 5) zusätzliche radiale Elemente, wie Scheiben (10, 12) aufweist, die auf diese Wellen (1, 2) festgekeilt sind und vorgesehen sind, um in entsprechende Längskerben (11) einzugreifen, die in dem endlosen Getriebeorgan (7) ausgebildet sind, dadurch gekennzeichnet, daß die genannten radialen Elemente, wie Scheiben (10, 12) wenigstens teilweise aus einem Magnetfelder gut leitenden Material, vorzugsweise mit Unterteilungen (44, 45, 49) in radialer Richtung gebildet sind, derart, um daran teilzunehmen, die von dem Endlosgetriebeelement (7) umschlungenen Bereiche magnetisch unbeweglich zu machen.

9. Getriebe nach Anspruch 8, dadurch gekennzeichnet, daß die Scheiben (10, 12) elastische Elemente (43, 48) aufweisen, die mit magnetischem Material gesättigt sind.

10. Getriebe nach Anspruch 8 oder 9, in dem das Getriebeorgan bzw. Übertragungsorgan eine endlose Kette ist, dadurch gekennzeichnet, daß die Kettenglieder (25) der Kette (7) die magnetischen Felder gut leitende seitliche Lamellen (26) mit geneigten Seiten aufweisen, die vorgesehen sind, um sich gegen die konischen Flansche (4, 6) der Scheiben (3, 5) zu drücken und Zwischenlamellen (7) aufweisen, die ebenfalls die magnetischen Felder gut leiten und vorgesehen sind, um zwischen den zusätzlichen radialen Elementen, wie beispielsweise Scheiben (10, 12) angeordnet zu sein, die auf die Wellen (1, 2) der Scheiben (3, 5) aufgekeilt sind, wobei alle diese Lamellen (26, 27) durch wenigstens ein Querverbindungselement (28) gehalten werden, das die magnetischen Felder nicht leitet.

11. Getriebe nach Anspruch 10, dadurch gekennzeichnet, daß die Endloskette (7), welcher unter Zug (Fig. 7) oder unter Druck (Fig. 6) arbeitet, aus Kettengliedern (25) gebildet ist, die ein konkaves Kettentrum zwischen den beiden Scheiben (3, 5) bilden und eine Längenkompensation während der Veränderung des Übersetzungsverhältnisses erlauben.

12. Getriebe nach Anspruch 8 oder 9, in dem das Übertragungsorgan ein Riemen ist, dadurch gekennzeichnet, daß der Riemen (7) seitliche Bereiche (36) und Zwischenbereiche (37) aufweist, die durch Intervalle voneinander getrennt sind und sehr magnetflußdurchlässig sind, die durch Querverbindungselemente (38) zusammengebracht werden, die die magnetischen Felder nicht leiten.

13. Getriebe nach Anspruch 12, dadurch gekennzeichnet, daß es eine "schwimmende" Spannvorrichtung (31) aufweist mit zwei Walzen (32, 33), die entsprechend unter den beiden Trums des Riemens (37) mittels einer Feder (34) angedrückt werden, die dazu tendiert, die Walzen (32, 33) voneinander wegzubringen.

14. Getriebe nach Anspruch 13, dadurch gekennzeichnet, daß die Winkelverschiebung der Abschnitte (13, 14), die beiderseits der Scheiben (3, 5) angeordnet sind, ausgehend von der Spannvorrichtung (31) insbesondere durch eine mechanische Verbindung erzeugt wird.

## Claims

1. Continuously variable ratio transmission mechanism of the kind comprising a driving shaft (1) carrying a first pulley wheel (3) having two conical flanges (4) the distance between which is variable, a driven shaft (2) carrying a second pulley wheel (5) having two conical flanges (6) the distance between which is variable, means (13—24) creating magnetic fields substantially parallel to the axes of the pulley wheels (3, 5) and applying said magnetic fields through the intermediary of sectors (13, 14) that are good conductors of magnetic field disposed to either side of each pulley wheel (3, 5) to the flanges (4, 6) of the two pulley wheels (3, 5) in the areas around which are wound an endless transmission member (7) such as a chain or trapezoidal cross-section belt passing around both pulley wheels (3, 5) and wound around each of them with a radius varying according to the distance between the flanges (4, 6), the transmission member (7) being adapted to conduct magnetic field in the transverse direction so as to close the magnetic field through the part of said transmission member (7) wound around each pulley wheel (3, 5), characterised in that the sectors (13, 14) are mounted to pivot about the axes of the pulley wheels (3, 5) and are adapted to be spaced in the angular direction according to the transmission ratio so as to remain in exact corresponding relationship with the areas around which the transmission member (7) is wound.

2. Transmission mechanism according to claim 1 characterised in that the magnetic fields applied to the flanges (4, 6) of the two pulley wheels (3, 5) through the intermediary of the pivoting sectors (13, 14) are created by permanent magnets (15) incorporated in magnetic circuits comprising said sectors (13, 14).

3. Transmission mechanism according to claim 1 characterised in that the magnetic fields applied to the flanges (4, 6) of the two pulley wheels (3, 5) through the intermediary of the pivoting sectors (13, 14) are created by electromagnets (16) incorporated in magnetic circuits comprising said sectors (13, 14).

4. Transmission mechanism according to any one of claims 1 through 3 characterised in that the magnetic field is applied to each pulley wheel (3, 5) through the intermediary of the aforementioned pivoting sectors (13, 14) over an angle at least slightly less than the sector over which the transmission member (7) is wound around the pulley wheel (3, 5).

5. Transmission mechanism according to any one of claims 1 through 4 characterised in that the aforementioned sectors (13, 14) comprise on each side of a pulley wheel (3, 5) at least one sector (13a, 14a) having a projection (23) nesting in a complementary recess (24) of another sector (13b, 14b) so that the magnetic field is continuous from one section to the other.

6. Transmission mechanism according to any one of claims 1 through 5 characterised in that conical flanges (4, 6) of the two pulley wheels (3, 5) comprise radial cut-outs (22) which divide them into numerous small sectors separated from each other by portions of small cross-section and/ or of non-magnetic material.

7. Transmission mechanism according to any one of claims 1 through 6 characterised in that each conical flange (4, 6) comprises on its external surface an annular collector (20) inserted to a variable depth in complementary circular arc-shape grooves (21) formed in the sectors (13, 14) situated on each side of each pulley wheel (3, 5).

8. Transmission mechanism according to any one of claims 1 through 7 comprising on the driving shaft (1) and on the driven shaft (2), between the two flanges (4, 6) of each pulley wheel (3, 5), additional radial members such as discs (10, 12) keyed to said shafts (1, 2) and adapted to be inserted into corresponding longitudinal grooves (11) formed in the endless transmission member (7), characterised in that said radial members such as discs (10, 12) are made at least in part from a material that is a good conductor of magnetic field, preferably with radial divisions (44, 45, 49) in order to contribute to magnetic immobilisation of the wound-on parts of the endless transmission member (7).

9. Transmission mechanism according to claim 8 characterised in that the discs (10, 12) comprise elastic members (43, 48) filled with magnetic material.

10. Transmission mechanism according to claim 8 or claim 9 in which the transmission member is an endless chain, characterised in that the links (25) of the chain (7) comprise sideplates (26) that are good conductors of magnetic field with inclined surfaces adapted to bear against the conical flanges (4, 6) of the pulley wheels (3, 5) and intermediate plates (27) that are also good conductors of magnetic field and are adapted to be interleaved between the additional radial members such as discs (10, 12) keyed to the shafts (1, 2) of the pulley wheels (3, 5), all said plates (26, 27) being held in position by at least one transverse linking member (28) that is not a conductor of magnetic field.

11. Transmission mechanism according to claim 10 characterised in that the endless chain (7) operates in tension (figure 7) or in compression (figure 6) and is made up of links (25) which form at least one concave run between the two pulley wheels (3, 5) and enable compensation of length during variation of the transmission ratio.

12. Transmission mechanism according to claim 8 or claim 9 in which the transmission member is a belt, characterised in that the belt (7) comprises side parts (36) and intermediate parts (37) with gaps between them that are highly permeable to magnetic flux and joined together by transverse linking members (38) that do not conduct magnetic field.

13. Transmission mechanism according to claim 12 characterised in that it comprises a "floating" tensioner device (31) having two rollers (32, 33) applied to respective runs of the belt (37) by means of a spring (34) tending to move the rollers (32, 33) away from each other.

14. Transmission mechanism according to claim 13 characterised in that the angular displacement of the sectors (13, 14) disposed on either side of the pulley wheels (3, 5) is originated by the tensioner device (31), for example by means of a mechanical linkage.

FIG.1

FIG.2

FIG.3

FIG. 4

FIG. 6

FIG. 5

FIG. 7

EP 0 283 480 B1

FIG. 8

FIG. 9

FIG. 10

# FIG.12

# FIG. 11

# FIG. 14

# FIG. 13

# FIG. 15